# EUROPÄISCHE PATENTSCHRIFT

(11) **EP 1 342 049 B1**
(45) Veröffentlichungstag und Bekanntmachung des Hinweises auf die Patenterteilung: **05.10.2005**
(21) Anmeldenummer: 01991830.9
(22) Anmeldetag: 12.12.2001
(51) Int. Cl.: G01B 7/34, G12B 21/00

(54) **RASTERSONDE IN PULSED FORCE MODE, DIGITAL UND IN ECHTZEIT**
SCANNING PROBE WITH DIGITISED PULSED-FORCE MODE OPERATION AND REAL-TIME EVALUATION
SONDE DE BALAYAGE EN MODE DIGITAL DE FORCE PULSEE ET EN TEMPS REEL

(30) Priorität: 13.12.2000 DE 10062049
(43) Veröffentlichungstag der Anmeldung: 10.09.2003
(73) Patentinhaber: WITEC Wissenschaftliche Instrumente und Technologie GmbH, 89081 Ulm (DE)
(72) Erfinder: SPIZIG, Peter, 89168 Niederstotzingen (DE); SANCHEN, Detlef, 89231 Neu-Ulm (DE); FÖRSTNER, Jörg, 89077 Ulm (DE); KOENEN, Joachim, 89081 Ulm (DE); MARTI, Othmar, 89075 Ulm (DE)
(74) Vertreter: Sawodny, Michael-Wolfgang
(86) Internationale Anmeldenummer: PCT/EP2001/014593
(87) Internationale Veröffentlichungsnummer: WO 2002/048644

(56) Entgegenhaltungen:
- US-A- 5 519 212
- A.ROSA-ZEISER ET AL.: "The simultaneous measurement of elastic, electrostatic and adhesive properties by scanning force microscopy: pulsed-force mode operation" MEAS. SCI. TECHNOL., Bd. 8, 1997, Seiten 1333-1338, XP000755937 (UK) in der Anmeldung erwähnt
- H.-U. KROTIL ET AL.: "Pulsed Force Mode: a New Method for the Investigation of Surface Properties" SURF. INTERFACE ANAL., Bd. 27, 1999, Seiten 336-340, XP000909914
- O. MARTI ET AL.: "Control electronics for atomic force microscopy" REV. SCIENT. INSTR., 1988, Seiten 836-839, XP000050599 New York, NY (US)

## Beschreibung

### Stand der Technik

Die Erfindung betrifft ein Verfahren zur Erzeugung der Abbildung einer Oberfläche einer zu untersuchenden Probe mit einer Auflösung, die lateral zur Oberfläche besser als 1µm und senkrecht zur Oberfläche besser als 100 nm ist, wobei eine Rastersonde die Oberfläche punktweise abrastert und an jedem Rasterpurikt der Probenoberfläche der Abstand zwischen Rastersonde und Probenoberfläche periodisch moduliert wird, so daß sich eine Kraft-Zeit-Kurve ergibt. Daneben stellt die Erfindung auch ein Rastersondenmikroskop zur Durchführung eines derartigen Verfahrens zur Verfügung.

Im Stand der Technik sind eine Vielzahl von Verfahren zur Abbildung von Probenoberflächen mittels von Rastersonden beschrieben worden.

Eine Möglichkeit der Untersuchung einer Probenoberfläche und der Erzeugung eines Oberflächenbildes mittels einer Rastersonde besteht darin, die Rastersonde in Kontakt mit der Probenoberfläche zu bringen und anschließend die Probenoberfläche abzurastem. Ein derartiges Abbildungsverfahren wird als "contact-mode" bezeichnet und dient beispielsweise der Bestimmung der Topographie sowie der lokalen Reibung. Betreffend das "contact-mode-Verfahren" wird auf nachfolgende Veröffentlichungen:
Maivald P, Butt H-J, Gould S A C, Prater C B, Drake B, Gurley J A, Elings V B und Hansma P K (1991), Using force modulation to image surface elasticities with the atomic force microscope, Nanotechnology, 2, 103-105 und
   - Marti O und Colchero J, 1992, Reibungsm ikroskopie, Phys. Blätter 48, 107
verwiesen.

Der Nachteil dieses Abbildungsverfahrens liegt darin, daß bei Verfahren der mit der Probenoberfläche in Kontakt stehenden Rastersonde Scherkräfte auftreten, die die Oberfläche von weichen Proben wie beispielsweise polymeren und biologischen Systemen deformieren oder sogar zerstören können.

Um eine Oberfläche vor Deformationen oder Zerstörung zu schützen ist es vorteilhaft, die Probenoberfläche mit Hilfe eines Verfahrens zu untersuchen, bei dem die Rastersonde nicht in Kontakt mit dieser steht. Dieses Verfahren wird in der Literatur allgemein als "non-contact-mode" bezeichnet. Es ist ein Verfahren, mit dem eine Zerstörung der Probenoberfläche vollständig ausgeschlossen werden kann. Ein Nachteil dieses Verfahrens besteht jedoch darin, daß die Auflösung mit wachsendem Abstand zwischen Rastersonde und Probenoberfläche abnimmt und keinerlei mechanische Probeneigenschaften untersucht werden können.

Bezüglich des "non-contact-mode" wird auf nachfolgende Veröffentlichungen verwiesen:
- Martin Y, Williams C C and Wickramasinghe H G, (1987), Atomic force microscope-force mapping and profiling on a sub 100-Åscale J. App. Phys., 61, 4723; Sarid D, Ruskell T G, Workman R K und Chen D, (1996), J. Vac. Sci. Technol. B, 14, 864-7.

Ein Verfahren, das die Untersuchung von weichen Proben oberflächen, wie beispielsweise die von Polymeren erlaubt, andererseits aber ausreichend Information der Probenoberfläche zur Verfügung stellt, ist das sogenannte "intermediate-contact-mode"-Verfahren, bei dem eine Rastersonde zu Oszillationen nahe ihrer Resonanzfrequenz angeregt werden. Die oszillierende Rastersonde wird dann an die Probe angenähert, bis sie die Probenoberfläche berührt. Der Phasenshift zwischen der freien Schwingung in Luft und der Schwingung wenn sich die Rastersonde an die Oberfläche annähert, hängt von den viskoelastischen Eigenschaften der Probe und dem adhäsiven Potential zwischen Probe und Rastersonde ab. Auf diese Art und Weise lassen sich elastische Eigenschaften bestimmen.

Bezüglich des "intermediate-contact-mode-Verfahrens" wird auf
Spatz J, Sheiko S, Möller M, Winkler R, Reineker P und Marti O, (1995), Forces affecting the substrate in the resonant tapping force microscopy, Nanotechnology, 6, 40-44
Digital Instruments, Incorporated, United States Patent No. 5,412,980 (1995)
   Tapping atomic force microscope
Digital Instruments, Incorporated, United States Patent No. 5,519,212 (1996)
   Tapping atomic force microscope with phase or frequency detection
verwiesen.

Das "intermediate-contact-mode-Verfahren" hat den Nachteil, daß die beiden Größen Amplitude und Phasen-Shift von einer Vielzahl von Variablen abhängen, so daß eine einfache Zuordnung zu einer physikalischen Größe nicht möglich ist.

Diese Nachteile können dadurch überwunden werden, daß die gesamte Kraft-Weg- bzw. Kraft-Zeit-Kurve bei Annähern der Rastersonde an die Probenoberfläche aufgenommen wird. Diese Kurve umfaßt sämtliche Informationen der Wechselwirkungskräfte zwischen Rastersonde und Probe und erlauben eine präzise Bestimmung der viskoelastischen Eigenschaften und der adhäsiven Kräfte.

Bezüglich dieses Verfahrens wird auf
- Radmacher M, Cleveland J P, Fritz M, Hansma H G und Hansma P K, (1994) Mapping interaction forces with the atomic force microscope Biophys. J, 66, 2159 - 65;
- Radmacher M, Fritz M, Cleveland J P, Walters D A und Hansma P K (1994) Imaging adhesion forces and elasticity of lysozyme adsorbed on mica with the atomic force microscope, Langmuir 10, 3809-14;
- Van der Werf K O, Putman C A J, Groth B G and Greve J (1994), Adhesion force imaging in air and liquid by adhesion mode atomic force microscopy Appl. Phys. Lett, 65, 1195-7;
- Mizes H A, Loh K-G, Miller R J D, Ahujy S K and Grabowskie E F (1991), Submicron probe of polymer adhesion with atomic force microscopy; dependence on topography and material inhomogenities Appl. Phys. Lett. 59, 2901-3
verwiesen.

Nachteilig bei diesen Verfahren ist, daß die Scan-Geschwindigkeit zur Aufnahme eines Bildes sehr niedrig ist.

Um diese Geschwindigkeit zu erhöhen, wurde ein neuartiges Verfahren, die sogenannte "Pulsed-Force-Mode"-Mikroskopie entwickelt. Bei der "Pulsed-Force-Mode (PFM)"-Mikroskopie wird die Rastersonde periodisch in z-Richtung, das heißt in senkrechter Richtung relativ zur Probenoberfläche in Oszillationen versetzt und die Kraft-Zeit-Kurve, die ein Abbild der Kraft-Weg-Kurve ist, aufgenommen und bestimmte Parameter dieser Kraft-Zeit-Kurve mit Hilfe analoger Schaltungen, wie beispielsweise Trigger-Schaltungen ausgewertet, um ein Abbild der Probenoberfläche zu erhalten.

Bezüglich der "Pulsed-Force-Mode"-Mikroskopie wird auf
- Rosa-Zeiser A, Weiland E, Hild S und Marti O, The simultaneous measurement of elastic, electrostatic and adhesive properties by scanning force microscopy: "pulsed-force-mode-operation", Meas. Sci. Technol. 8, (1997), 1333-1338
verwiesen.

Nachteilig an dem Abbildungsverfahren einer Probe mit Hilfe der "Pulsed-Force-Mikroskopie", wie sie aus dem Stand der Technik, beispielsweise oben genanntem Dokument bekannt geworden ist, ist, daß Trigger zur Verarbeitung der Analog-Signale gesetzt werden mußten. Da sich die Auswertung der Pulsed-Force-Kurve im wesentlichen auf den Zeitpunkt des Auftreten der Trigger beschränkt, hatte dies Ungenauigkeiten zur Folge und optimale Signale konnten nur schwer erhalten werden:

Des weiteren erforderte das Setzen der Trigger geübtes Bedienpersonal und ist sehr zeitaufwendig.

Ein weiterer Nachteil der "Pulsed-Force-Mikroskopie" nach dem derzeitigen Stand der Technik ist, daß die Möglichkeiten der Auswertung der Kraftkurven sehr beschränkt und damit ungenau bleiben und sich deswegen mit dieser Technik somit nur äußerst schwierig materialwissenschaftlich relevante oder quantitative Meßwerte gewinnen lassen.
Auch ist das Verfahren auf maximal zwei pro rastermikroskopischer Messung auswertbaren Größen beschränkt, was oftmals nicht ausreichend ist.

Aufgabe der Erfindung ist es somit, ein Abbildungsverfahren für eine Vorrichtung umfassend eine Rastersonde anzugeben, das es zum einen gestattet, eine Vielzahl physikalischer Eigenschaften während einer rastermikroskopischen Messung qualitativ und quantitativ aufzunehmen, zum anderen aber eine Abbildung in kurzer Zeit und mit ausreichender Genauigkeit zur Verfügung stellt.
Dabei soll durch die Erfindung ermöglicht werden, erstmals auch komplexere Größen wie konstante Maximalkraft (unter Berücksichtigung von z.B. durch Interferenzen oder langreichweitigen Kräften hervorgerufenen Meßartefakten), konstanter Energieeintrag, konstante Eindringtiefe, usw. oder Kombinationen dieser Größen für die Regelung zu verwenden, wobei der Wechsel zwischen verschiedenen Regelparametern möglich sein soll. Um alle in Kraft-Zeit-Kurven enthaltenen Parameter für die Messung zugänglich zu machen und bei einigen Materialparametern die Meßgenauigkeit zu steigern, soll durch die Erfindung des weiteren eine aktive Steuerung von Signalform, Phase, Frequenz und Amplitude des Modulationssignals ermöglicht werden.

Erfindungsgemäß wird diese Aufgabe nach den Ansprüchen 1, 30 gelöst. Die mit Hilfe der Pulsed-Force-Methode aufgenommene Kraft-Zeit-Kurve wird zu jedem Rasterpunkt digitalisiert und mit Hilfe von digitaler Signalverarbeitung und programmierter Logik einer Echtzeitauswertung mit einer Zeitspanne kürzer als die Periodendauer unterworfen. Darüber hinaus kann in einer vorteilhaften Ausführungsform der Datenstroms einer weiteren Recheneinheit zur Onlineauswertung und zur Speicherung für Postprocessing weitergeleitet werden.

In der vorliegenden Anmeldung wird unter
* Echtzeitauswertung eine Auswertung eines digitalen Datenstroms und Bereitstellung des oder der Ergebnisse innerhalb einer fest vorgegebenen Zeitspanne verstanden. Soll das Auswerteergebnis als lstgröße für einen Regler dienen, so ist, um die Reglerabweichungen klein zu halten, eine derartige Echtzeitauswertung erforderlich.
* Unter Onlineauswertung wird eine zum Datenstrom parallel ablaufende Auswertung eines Datenstromes ohne die Notwendigkeit innerhalb einer vorgegebenen Zeitspanne ein Ergebnis bereitzustellen verstanden. Dies ist dann vorteilhaft, wenn man bereits während einer Messung eine Aussage über den Erfolg der Messung treffen möchte. Dann ist eine parallel stattfindende Verarbeitung der Meßdaten notwendig.
* Unter Postprocessing wird in der vorliegenden Anmeldung eine Auswertung eines zuvor auf einem Datenspeichermedium, z.B. einer Festplatte eines Rechners, abgelegten Datenstromes ohne irgendwelche Restriktionen bezüglich des Zeitbedarfs verstanden.

Die Digitalisierung der Kraft-Zeit-Kurve und die Auswertung mittels programmierter Logik erlauben es, daß aus den Kraft-Zeit-Kurven sowohl in Echtzeit nach regelungstechnischer Notwendigkeit, Online, als auch im Rahmen von Postprocessing für jeden Rasterpunkt gemäß Vorgabe eine oder mehrere charakteristische Größen der Kraft-Zeit-Kurve ermittelt und aus diesen charakteristischen Größen Eigenschaftsabbilder der Proben-Oberfläche aufgebaut werden können. Durch die Einbeziehung der gesamten Kurve in die Auswertung statt einzelner Kurvenpunkte können neben dem Aufbau einer Abbildung mit Hilfe der charakteristischen Größen, diese auch zur Ableitung bestimmter quantitativer physikalischer Eigenschaften verwendet werden.
Die im Gegensatz zur klassischen Pulsed-Force-Methode bei der Erfindung aktiven Erzeugung und Kontrolle des Modulationssignals erlaubt es, während der Messung interaktiv, aber auch durch Regelparameter automatisch gesteuert, die Modulationskurvenform, -Phase, -Amplitude und -Frequenz zu beeinflussen.

Somit wird durch die Erfindung für die Auswertung der Kraft-Distanz-Kurven eine Vielzahl von Methoden anwendbar, die es gestatten, im Gegensatz zu bisherigen Meßmethoden, innerhalb einer einzigen Messung verschiedenste Probenparameter wie z.B. viskoses, adhesives und elastisches Verhalten getrennt zu erfassen und zu unterscheiden. Da die Kraft-Distanz-Kurven am Ende einer Messung vollständig digital vorliegen und somit einem gegebenenfalls auch zeitaufwendigen Postprocessing unterworfen werden können stehen die gespeicherten Daten auch zur nachträglichen Aufklärung von Meßartefakten zur Verfügung.
Gleichzeitig ist mit einer Onlineauswertung eine augenblickliche Erfolgskontrolle zum Meßzeitpunkt möglich, wobei im Vergleich zur "Pulsed-Force-Mikroskopie" gemäß dem zuvor zitierten Stand der Technik umfassendere Auswerteverfahren zum Einsatz kommen können.

Vorteilhaft erscheint dabei vor allem die Möglichkeit das die Zahl der für die Regelung verwendeten und sonstigen auszuwertenden Größen keinerlei Beschränkung mehr unterworfen sind und der Wechsel von einem Auswerteverfahren zum anderen durch Software und nicht mehr wie im Stand der Technik durch den Austausch von Hardware bewerkstelligt werden muß.

Besonders bevorzugt beträgt die Frequenz der periodischen Bewegung der Rastersonde in der Richtung senkrecht zur Probenoberfläche 1 Hz bis 20 kHz und die Amplitude liegt im Bereich von 10 bis 500 nm. Vorteilhafterweise werden dabei sinusförmige oder sinusähnliche Anregungen gewählt, wobei aber auch andere wie sägezahn- oder trapezförmige Anregungen vorteilhaft sein können. Eine Analyse der tatsächlichen Bewegung der Rastersonde ermöglicht es, die Form der Anregung so zu modifizieren bzw. zu verändern, daß die Sonde die gewünschte periodische Bewegung ausführt.

Ausgangspunkt für jeden Bildaufbau ist die Bestimmung der Nullinie als charakteristischer Größe. Die Nullinie kann von Punkt zu Punkt variieren aufgrund langreichweitiger elektrostatischer Kräfte. Die Nullinie kann aus dem Kraftwert der Kraft-Zeit-Kurve ermittelt werden, der sich ergibt, wenn die Rastersonde in der Nähe der Probenoberfläche ist, aber noch nicht mit ihr in Kontakt steht.

Alle weiteren charakteristischen Größen ergeben sich aus der Kraft-Zeit-Kurve unter Berücksichtigung dieser Grund- oder Nullinie.

In einer ersten Ausgestaltung der Erfindung kann vorgesehen sein, als weitere charakteristische Größe den maximalen repulsiven Kraft-Wert aus der digitalisierten Kraft-Zeit-Kurve zu ermitteln, der sich ergibt, während die Rastersonde in Kontakt mit der Oberfläche ist.

In einer weiteren Ausgestaltung der Erfindung ist vorgesehen, als charakteristische Größe die Differenz zwischen einem Punkt im ansteigenden oder abfallenden Ast der Kraft-Zeit-Kurve zur Maximalkraft zu bestimmen. Diese Differenz ist dann ein quantifizierbares Maß für die lokale Steifigkeit der Probe und ergibt aufgetragen über dem abgetasteten Bereich ein Steifigkeitsbild der Oberfläche.

In einer weiteren Ausgestaltung der Erfindung kann vorgesehen sein, als charakteristische Größe den minimalen attraktiven Kraftwert beim Ablösen der Spitze von der Probenoberfläche aus der Kraft-Zeit-Kurve zu ermitteln. Dieser charakteristische Wert ist ein quantifizierbares Maß für die lokale Adhäsion der Probe und ergibt ein Adhäsionsbild der Oberfläche, wenn sie über dem abgetasteten Bereich aufgetragen wird.

Als weitere charakteristische Größe kann, aus der digitalisierten Kraft-Zeit-Kurve der minimale Kraftwert beim Anschnappen der Probensonde an die Probenoberfläche bestimmt werden. Dieser minimale Kraftwert ist ein quantifizierbares Maß für die lokale Anziehung der Probe. Trägt man diese charakteristische Größe über dem abgetasteten Bereich auf, so kann man ein Anziehungsbild der Probe erhalten.

Steifigkeitsbilder der Probe lassen sich aber auch noch auf andere Art und Weise aus der aufgenommenen Kraft-Zeit-Kurve ermitteln. In einer ersten Ausführungsform wird ein Steifigkeitsbild dadurch erhalten, daß als charakteristische Größe die Steigung der Kraft-Zeit-Kurve zu einer bestimmten Zeit beim Eindrücken der Probensonde in die Probenoberfläche ermittelt wird. Diese Steigung ist ein quantifizierbares Maß für die lokale Steifigkeit der Probe.

Alternativ hierzu kann man die Steigung zu einem bestimmten Relativzeitpunkt der Kraft-Zeit-Kurve beim Wegziehen der Probensonde von der Probe bestimmen. Auch diese Steigung ist ein quantifizierbares Maß für die lokale Steifigkeit der Probe und ergibt bei einem Auftrag über dem abgetasteten Bereich ein Steifigkeitsbild derselben.

In einer weiteren Ausgestaltung der Erfindung kann vorgesehen sein, als charakteristische Größe die Frequenz des freien Ausschwingens des Cantilervers zu erfassen. Dieses ist ein quantifizierbares Maß für aufgesammelte Verunreinigungen oder Beschädigungen der Spitze.

Als weitere charakteristische Größe kann aus der digitalisierten Kraft-Zeit-Kurve das Verhältnis zwischen dem minimalen Kraftwert beim Ablösen von der Probenoberfläche und dem gemessenen Kraftwert beim ersten darauffolgenden lokalen Kraftmaximum bestimmt werden. Dieser charakteristische Wert ist ein quantifizierbares Maß für die Energiedissipation beim Ablösen der Spitze von der Probe.

Ermittelt man aus der Kraft-Zeit-Kurve die Anstiegszeit vom Beginn des Kontaktes bis zur maximalen Kraft, so kann man ein Anstiegszeitenbild der Probenoberfläche generieren. Auf analoge Art und Weise ist es möglich, durch Ermitteln der Abfallzeit aus der digitalisierten Kraft-Zeit-Kurve ein Abfallzeitenbild der Probenoberfläche zu erhalten.

In einer fortgebildeten Ausführungsform der Erfindung kann vorgesehen sein, daß die Zeit des repulsiven Kontaktes zwischen Probe und Spitze beziehungsweise die Zeit des Kontaktes zwischen Probe und Spitze aus der auch aufgenommenen digitalisierten Kraft-Zeit-Kurve bestimmt wird. Diese Zeiten ergeben aufgetragen über dem abgetasteten Bereich ein Repulsivkontaktzeitenbild beziehungsweise ein Kontaktzeitenbild der Probenoberfläche.

Ähnlich zu den Kontaktzeiten im repulsiven Bereich der Kraftkurve können in einer fortgebildeten Ausführungsform der Erfindung auch Kontaktzeiten für den adhäsiven Teil der Kraftkurve, etwa vom Kraftminimum bis zum Nulldurchgang der Kraftkurve ermittelt werden.

Diese Zeiten ergeben aufgetragen über dem abgetasteten Bereich ein Abreisszeitenbild der Probenoberfläche.

Neben der direkten Auswertung der Kraft-Zeit-Kurve können noch diverse Integrale unter der Kraft-Zeit-Kurve als charakteristische Größen bestimmt werden. Beispielsweise ist es anhand der digitalisierten Kurve möglich, das Integral unter der Kraft-Zeit-Kurve im Bereich des repulsiven Kontaktes bzw. vom Beginn des Kontaktes bis zum Erreichen der maximalen Kraft und vom Erreichen der maximalen Kraft bis zum Nulldurchgang der Kraft zu bestimmen. Diese Integralwerte ergeben aufgetragen über dem abgetasteten Bereich ein Repulsivkontakt-Integralbild der Probe, im Falle des Integrals vom Beginn des Kontaktes bis zum Erreichen der maximalen Kraft ein Bild der an der Probe geleisteten Arbeit sowie im Falle des Integrals vom Zeitpunkt des Erreichens der maximalen Kraft bis zum Nulldurchgang ein Bild der von der Probe geleisteten Arbeit.

Ähnlich zu den Integralen im repulsiven Bereich können aus den digitalisierten Kraft-Zeit-Kurven auch Integrale für den adhäsiven Bereich der Kraftkurve bestimmt werden.
Beispielsweise ist es möglich die Fläche unter der Kraftkurve Vom Zeitpunkt minimaler Kraft bis zum Zeitpunkt des Nulldurchgangs der Kraftkurve zu bestimmen.
Diese Integral ist ein Maß für die lokalen viskoelastischen Eigenschaften der Probe

Berechnet man die Differenz der Integrale im Bereich des repulsiven Kontaktes sowie des Integrales unter der Kraft-Zeit-Kurve von Beginn des Kontaktes bis zum Erreichen der maximalen Kraft, so kann man ein Bild der von der in der Probe dissipierten Arbeit erstellen.

Besonders vorteilhaft ist es, wenn die aus der Kraft-Zeit-Kurve bestimmten charakteristischen Größen in einem zweiten Speicherbereich unter Zuordnung zu den verschiedenen Meß- bzw. Rasterpunkten abgelegt werden.

Mit der Erfindung ist aufgrund der Echtzeitauswertung erstmals möglich sehr schnell zu einer Aussage zu kommen, ob die momentan durchgeführte Messung erfolgreich verläuft, da die in Echtzeit ausgewerteten digitalisierten Kraft-Zeit-Kurve dem Anwender entweder sofort, d.h. während des laufenden Meßung als extern am Gerät abgreifbares elektrisches Signal, und damit von jedem AFM-Controller einlesbar, oder visualisiert durch den Steuerrechner zur Verfügung stehen.

Neben dem erfindungsgemäßen Verfahren stellt die Erfindung auch eine Vorrichtung zur Durchführung des Verfahrens zur Verfügung, wobei sich das Rastersondenmikroskop zur Durchführung des Verfahrens dadurch auszeichnet, daß die Vorrichtung eine A/D-Wandlereinrichtung aufweist, um die aufgenommene Kraft-Zeit-Kurve zu digitalisieren sowie Mittel um vorgegebene charakteristische Größen aus der digitalisierten Kraft-Zeit-Kurve in Echtzeit bestimmen zu können.

Eines oder mehrere der gewonnenen Echtzeit-Auswerteergebnisse können als Regelsignal zur Nachführung der Rastersonde mit der Probentopographie oder zur Steuerung des Modulationssignals verwendet worden. Vorteilhafterweise wird als Regelsignal zur Nachführung der Rastersonde mit der Probentopographie meist die Differenz zwischen dem maximalen repulsiven Kraftwert und dem Kraftwert der sich ergibt wenn die Rastersonde in der Nähe aber noch nicht im Kontakt mit der Probe befindet verwendet, wobei vorteilhafterweise auch auf die Verwendung anderer Größen zurückgegriffen werden kann.

Werden die digitalisierten Kraft-Zeit-Kurven in einem Speicherbereich abgelegt, so können bestimmte Größen der Kraft-Zeit-Kurven durch Postprocessing bestimmt worden.

Vorteilhafterweise wird die oszillierende Bewegung der Rastersonde senkrecht zur Probenoberfläche mit Hilfe eines Piezoelementes angeregt.

Des weiteren ist in einer ersten Ausführungsform vorgesehen, daß die Rastersonde eine an einem Balken angeordnete Spitze umfaßt und die Mittel zur Aufnahme der Kraft-Zeit-Kurve Mittel zur Messung der Balkendurchbiegung, beispielsweise mit Hilfe der Ablenkung eines Laserstrahles umfassen.

Die Erfindung soll nachfolgend anhand der Zeichnungen beispielhaft beschrieben werden.

Es zeigen:
- Figur 1: den charakteristischen Verlauf einer Kraft-Zeit-Kurve
- Figur 2: ein Blockdiagramm für ein erfindungsgemäßes Rastersondenmikroskop

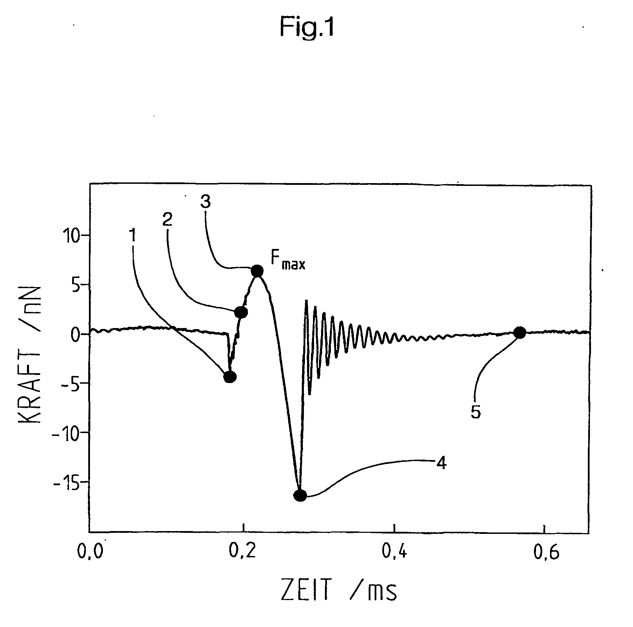

In Figur 1 ist der charakteristische Verlauf einer Kraft-Zeit-Kurve dargestellt, wie er nach Durchlaufen einer Schwingungsperiode einer Rastersonde, vorliegend der an einem Balken angeordneten Sondenspitze erhalten wird. Die Schwingungsamplitude der mittels eines Piezoelementes angeregten Schwingung der Rastersondenspitze liegt zwischen 10 und 500 nm, die Schwingungsfrequenz zwischen 1 Hz und 5 kHz, vorliegend im Bereich 1 kHz.

In Figur 1 sind ganz deutlich die charakteristischen Bereiche der sich bei Anregung senkrecht zur Probenoberfläche ergebenden Kraft-Zeit-Kurve zu erkennen, die zur Bestimmung der charakteristischen Größen herangezogen werden können und bei entsprechender Auftragung über dem abgetasteten Bereich die verschiedenen Formen der Abbildung der Probenoberfläche ergeben.

Die in Figur 1 dargestellte Funktion ist bereits auf die Basis- oder Nullinie normiert, das heißt, der Kraftwert der Basislinie der Rastersonde ist zu Null gesetzt. Die Basislinie kann dadurch bestimmt werden, daß man den Bereich der Kraft-Zeit-Kurve ermittelt, in dem sich der Kraftwert nicht mehr verändert. Diesen Wert - hier mit Bezugsziffer 5 belegt - setzt man zu Null, relativ hierzu ermittelt man die anderen Kraftwerte der Kurve.

Zunächst wird die Rastersonde an die Probenoberfläche angenähert. Nach etwa 0,2 Millisekunden kommt aufgrund der negativen attraktiven Anziehungskräfte zwischen Rastersonde und Probe die Sonde in Kontakt mit der Probe. Nachdem die Spitze mit der Probe in Kontakt ist, wird durch das Piezoelement weiter Kraft auf die Rastersonde beziehungsweise die Spitze ausgeübt und so die Spitze in die Probe bzw. Probenoberfläche eingetrieben. Die rücktreibenden repulsiven Kräfte steigen dabei stark an und erreichen im Punkt 3 ein Maximum. Nach einem voreingestellten Weg beziehungsweise einem voreingestellten maximalen Kraftwert Fₘₐₓ wird die Rastersonde nicht mehr in die Probe eingetrieben sondern vom Piezoelement von der Probe zurückgezogen. Diese gerät aufgrund der Adhäsionskräfte allerdings erst bei Erreichen des Kraftminimums am Punkt 4 außer Kontakt mit der Probe und geht in eine freie Schwingung über. Die freie Schwingung klingt ab, bis die Basislinie 5 erreicht wird.

Anschließend wird der Zyklus nochmals wiederholt.

Der Verlauf der Kraft-Zeit-Kurve ist im Prinzip nach für sämtliche Proben, die mit Hilfe der "Pulsed-Force-Mikroskopie" untersucht werden derselbe, jedoch lassen sich aus der Kurve für die jeweilige Probe beziehungsweise für den jeweiligen Punkt der Probe charakteristische Größen ermitteln, die wiederum zusammengesetzt eine Abbildung der Probenoberfläche in Abhängigkeit von unterschiedlichen physikalischen Parametern ergeben.

So ist beispielsweise die Differenz zwischen dem Punkt 2 im ansteigenden Ast der Kraft-Zeit-Kurve und der Maximal-Kraft ein quantifizierbares Maß für die lokale Steifigkeit der Probe. Wird diese charakteristische Größe aus der aufgenommenen Kraft-Zeit-Kurve gemäß der Erfindung ausgewertet, so kann man ein lokales Steifigkeitsbild der Probe erhalten.

Der minimale attraktive Kraftwert 4 beim Ablösen der Spitze von der Probenoberfläche wiederum ist ein quantifizierbares Maß für die lokale Adhäsion der Probe und ergibt aufgetragen über dem abgetasteten Bereich ein Adhäsionsbild.

Der minimale Kraftwert beim Anschnappen der Rastersonde an die Probenoberfläche im Punkt 1 wiederum ist ein quantifizierbares Maß für die lokale Anziehung der Probe und ergibt aufgetragen über dem abgetasteten Bereich ein Anziehungsbild der Oberfläche. Aus den Anstiegszeiten vom Beginn des Kontaktes bis zur maximalen Kraft und der Abfallzeit von der maximalen Kraft bis zum Erreichen des Nulldurchganges ergeben Anstiegs- und Abfallzeitabbildungen der Probenoberfläche.

Des weiteren ermöglicht die Erfindung auch die Auswertung integraler Größen. So kann das Integral unter der Kraft-Zeit-Kurve im Bereich des repulsiven Kontaktes bestimmt werden sowie das Integral unter der Kraft-Zeit-Kurve vom Beginn des Kontaktes bis zum Erreichen der maximalen Kraft in Punkt 3. Zieht man diese beiden Integralwerte voneinander ab, so erhält man eine quantifizierbare Aussage über die in der Probe dissipierte Arbeit.

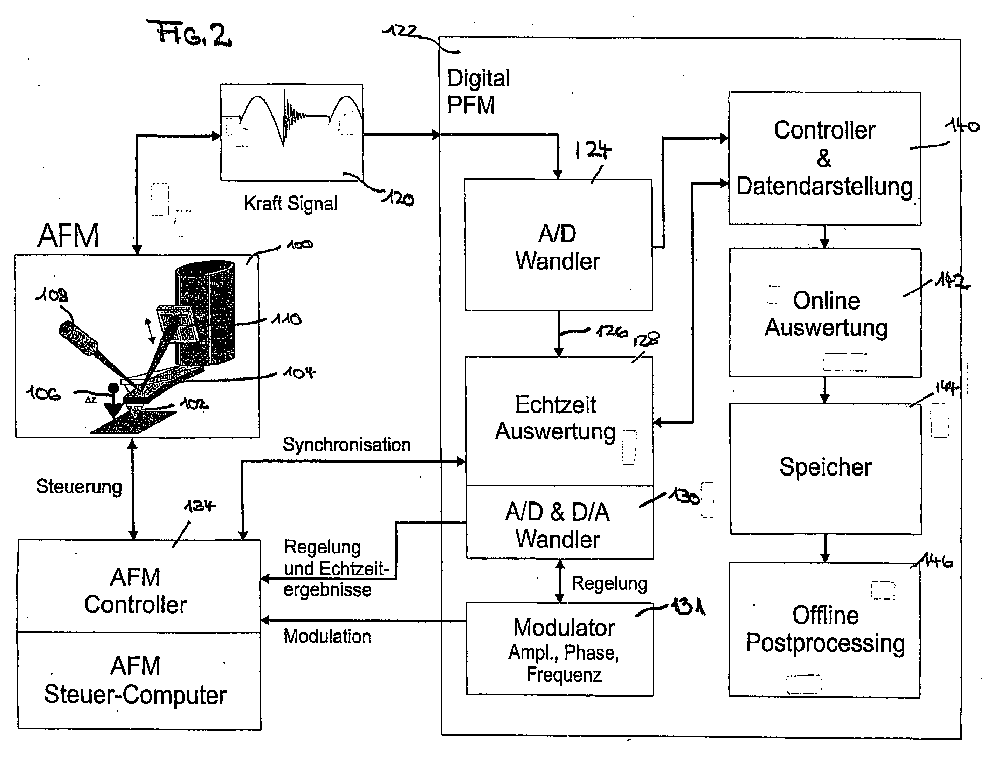

In Figur 2 ist im Rahmen eines Blockschaltbildes beispielhaft der Aufbau eines erfindungsgemäßen Raster-Sonden-Mikroskopes, das im "Pulsed Force Mode" betrieben wird, dargestellt. Das Raster-Sonden-Mikroskop ist mit der Bezugsziffer 100 bezeichnet. Das Raster-Sonden-Mikroskop umfaßt einen Rastersonde 102, die in der Regel eine Spitze ist. Die Rastersonde ist an einem Balken 104 aufgehängt. Die Rastersonde wird in Z-Richtung 106, d. h. in senkrechter Richtung relativ zur Probenoberfläche in Oszillation versetzt. Die Durchbiegung des Balkens 104, an dem die Spitze 102 angeordnet ist, wird durch einen von einer Laserdiode 108 ausgesandten und reflektierten Strahl, der auf einem Vier-Quadranten-Detektor 110 detektiert wird, ausgewertet. Das aufgrund der Durchbiegung des Balkens 104, der auch als Cantilever bezeichnet wird, erhaltene analoge Kraftmeßsignal ist mit der Bezugsziffer 120 belegt. Das analoge Kraftsignal 120 wird einer Steuereinheit 122 gemäß der Erfindung zugeleitet. Die Steuereinheit 122 umfaßt einen A/D-Wandier 124, der die analogen Daten des Kraftsignals 120 in einen digitalen Datenstrom 126 wandelt. Der digitale Datenstrom wird mittels einer Echtzeit-Auswerteeinheit 128 in Echtzeit beispielsweise mit Hilfe einer programmierten Logik ausgewertet. Unter Echtzeit versteht man, daß das Auswerteergebnis garantiert innerhalb einer fest vorgegebenen Zeitspanne, also hier spätestens bis zum Ende des aktuellen Modulationszyklus vorliegt, so daß das Ergebnis als Istgröße für einen Regler dienen kann. Die programmierte Logik kann beispielsweise durch "Field Programmable Gate Arrays", kurz: FPGAs, realisiert sein. Derartige programmierte Logiken sind beispielsweise in Ashok K. Sharma: "Programmable Logic Handbook: PLDs, CPLDs and FPGAs (McGraw-Hill Professional Publishing; ISBN: 0070578524)" oder in "W. Bolton, Bill Bolton: Programmable Logic Controllers : An Introduction (Butterworth-Heinemann; ISBN: 0750647469)" beschrieben.
Mit Hilfe der Echtzeitauswertung 128 ist es möglich, nach dem das ausgewertete, digitale Signal erneut in ein Analogsignal im D/A-Wandler 130 gewandelt wurde, beispielsweise die konstante Maximalkraft (unter Berücksichtigung von z.B. durch Interferenzen oder langreichweitigen Kräften hervorgerufenen Meßartefakten), den konstanten Energieeintrag, die konstante Eindringtiefe, usw. oder Kombinationen dieser Größen für die Regelung zu verwenden.
In die Berechnung der Regler Istgröße kann durch den A/D-Wandler 130 auch ein externes Analogsignal, beispielsweise ein vom AFM-Controller vorgegebener Sollwert, einfliesen. Die Regelgrößen werden vom Controller des Raster-Sonden-Mikroskopes 134 an des Raster-Sonden-Mikroskop 100 zum Nachführen der Spitze 102 am Balken 104 verwandt.

Aufgabe des Modulators 131 ist es die für den "Pulsed Force Mode" notwendige vertikale Oszillation der Meßspitze zu erzeugen. Der digitale Aufbau erlaubt es, beliebige Kurvenformen für die Modulation zu verwenden. Durch die enge Anbindung an die oben beschriebene Echtzeitauswertung ist neben einem interaktiven Nutzereingriff auch ein durch Regelparameter automatisch gesteuerten Einfluß auf Phase, Amplitude und Frequenz der Modulation möglich, was beispielsweise die Korrektur von Piezo-Nichtlinearitäten des Raster-Sonden-Mikroskops gestattet.

Neben Echtzeit-Regelung bzw. Nachführung der Rastersonde 104 ermöglicht die Echzeitauswertung mit Hilfe des Bausteines 128 auch die synchrone Auswertung von charakteristischen Daten im Baustein 140 und somit eine Online-Kontrolle bzw. Auswertung 142 der Messung. Des weiteren kann ein Speicherbereich 144, in dem der digitale Datenstrom abgelegt wird, vorgesehen sein. Der im Speicher abgelegte Datenstrom 144 kann nach Durchführen der Messung offline in einem Postprocessing-Prozeß 146 ausgeführt werden.

Mit der Erfindung wird somit erstmals ein Verfahren sowie eine Vorrichtung zur Durchführung eines Verfahrens zur Verfügung gestellt, mit der es möglich ist, eine Vielzahl für eine Probe charakteristischer Größe durch eine einzige Messung exakt zu bestimmen und hieraus die Abbildung verschiedener physikalischer Oberflächeneigenschaften zu erreichen.

## Patentansprüche

1. Verfahren zur Erzeugung der Abbildung einer zu untersuchenden Probenoberfläche mit einer Auflösung die lateral zur Probenoberfläche besser als 1 µm und vertikal zur Oberfläche besser als 100 nm ist, wobei
1.1 eine Rastersonde die Oberfläche punktförmig abrastert und
1.2.1 an jedem Rasterpunkt der Probenoberfläche der Abstand zwischen Rastersonde und Probenoberfläche periodisch moduliert wird, so dass sich für diesen Punkt eine Kraft-Zeit-Kurve der Rastersonde ergibt, **dadurch gekennzeichnet, dass**
1.3 die aufgenommene Kraft-Zeit-Kurve mittels eines A/D-Wandlers digitalisiert und der entstehende Datenstrom in Echtzeit ausgewertet wird,
1.4 aus der digitalisierten und in Echtzeit ausgewerteten Kraft-Zeit-Kurve eine oder mehrere charakteristische Größen der Kraft-Zeit-Kurve für jeden Rasterpunkt in Echtzeit ermittelt werden
1.5 aus dieser oder diesen charakteristischen Größen der Rasterpunkte eine Abbildung der Probenoberfläche und/oder Kontrollgrößen für den Messablauf erhalten werden und
1.6 aus dem in Echtzeit ausgewerteten Datenstrom Größen für die Regelparameter der Rastersonde ermittelt werden, die dem oder den Reglern der Rastersonde in Echtzeit zur Verfügung gestellt werden.

2. Verfahren, gemäß Anspruch 1, **dadurch gekennzeichnet, dass** der digitalisierte Datensatz für spätere Auswertungen in einem ersten Bereich einer Speichereinrichtung abgelegt wird.

3. Verfahren, gemäß Anspruch 2, **dadurch gekennzeichnet, dass** aus dem digitalisierten, abgelegten Datensatz eine oder mehrere charakteristische Größen für jeden Rasterpunkt ermittelt werden und aus diesen Größen eine Abbildung der Probeoberfläche erhalten wird.

4. Verfahren gemäß einem der Ansprüche 1 bis 3, **dadurch gekennzeichnet, dass** die Frequenz der periodischen Bewegung im Bereich 1 Hz - 20 kHz und die Amplitude im Bereich 10-500 nm liegt.

5. Verfahren gemäß einem der Ansprüche 1 bis 4, **dadurch gekennzeichnet, dass** die Digitalisierung der Kraft-Zeit-Kurve mit mindestens 16 bit Auflösung und mindestens 5 MHz Abtastrate erfolgt.

6. Verfahren gemäß einem der Ansprüche 1 bis 5, **dadurch gekennzeichnet, dass** mindestens ein Teil der Auswertung in Echtzeit erfolgt.

7. Verfahren gemäß einem der Ansprüche 1 bis 6, **dadurch gekennzeichnet, dass**
die charakteristische(n) Größe(n) den Kraftwert umfassen, der sich ergibt, wenn sich die Rastersonde in der Nähe der Probenoberfläche befindet, aber noch nicht mit ihr in Kontakt ist.

8. Verfahren nach einem der Ansprüche 1 bis 7, **dadurch gekennzeichnet, dass** die charakterisiische(n) Größe(n) den maximalen repulsiven Kraftwert umfasst, der sich ergibt, während die Rastersonde in Kontakt mit der Probenoberfläche ist.

9. Verfahren nach einem der Ansprüche 1 bis 8, **dadurch gekennzeichnet, dass** die charakteristische(n) Größe(n) die Differenz zwischen einem Wert im ansteigenden oder abfallenden Bereich der Kraft-Zeit-Kurve und dem Maximalwert der Kraft-Zeit-Kurve umfasst.

10. Verfahren nach einem der Ansprüche 1 bis 9, **dadurch gekennzeichnet, dass** die charakteristische(n) Größe(n) den minimalen attraktiven Kraftwert umfasst, der sich beim Ablösen der Rastersonde von der Probenoberfläche ergibt

11. Verfahren gemäß einem der Ansprüche 1 bis 10, **dadurch gekennzeichnet, dass** die charakteristische(n) Größe(n) den minimalen Kraftwert beim Heranziehen der Rastersonde an die Probenoberfläche umfasst.

12. Verfahren nach einem der Ansprüche 1 bis 11, **dadurch gekennzeichnet, dass** die charakteristische(n) Größe(n) die Steigung der Kraft-Zeit-Kurve zu einem bestimmten Zeitpunkt beim Eindrücken der Spitze in die Probenoberfläche umfasst.

13. Verfahren gemäß einem der Ansprüche 1 bis 12, **dadurch gekennzeichnet, dass** die charakteristische(n) Größe(n) die Steigung der Kraft-Zeit-Kurve zu einem bestimmten Zeitpunkt beim Wegziehen der Spitze von der Probenoberfläche umfasst.

14. Verfahren gemäß einem der Ansprüche 1 bis 13, **dadurch gekennzeichnet, dass** die charakteristische(n) Größe(n) die Frequenz des Cantilevers aus der Kraft-Zeit-Kurve im Zeitraum des freien Ausschwingens des Cantilevers umfasst.

15. Verfahren gemäß einem der Ansprüche 1 bis 14, **dadurch gekennzeichnet, dass** die charakteristische(n) Größe(n) das Verhältnis zwischen minimalem Kraftwert und dem darauffolgendern lokalen Maximalkraftwert umfasst.

16. Verfahren gemäß einem der Ansprüche 1 bis 15, **dadurch gekennzeichnet, dass** die charakteristische(n) Größe(n) die Anstiegszeit von Beginn des Kontaktes der Rastersonde mit der Probenoberfläche bis zum Kraftmaximum umfasst.

17. Verfahren gemäß einem der Ansprüche 1 bis 16, **dadurch gekennzeichnet, dass** die charakteristische(n) Größe(n) die Abfallzeit vom Zeitpunkt des Kraftmaximums bis zum Erreichen des Nulldurchganges in der Kraft-Zeit-Kurve umfasst.

18. Verfahren gemäß einem der Ansprüche 1 bis 17, **dadurch gekennzeichnet, dass** die charakteristische(n) Größe(n) die Zeit des repulsiven Kontaktes zwischen Probe und Rastersonde umfasst.

19. Verfahren gemäß einem der Ansprüche 1 bis 18, **dadurch gekennzeichnet, dass** die charakteristische(n) Größe(n) den Zeitpunkt des Kontaktes zwischen der Rastersonde und der Probenoberfläche umfasst.

20. Verfahren gemäß einem der Ansprüche 1 bis 19, **dadurch gekennzeichnet, dass** die charakteristische(n) Größe(n) die Zeit vom Erreichen des Kraftminimums bis zum darauffolgenden Nulldurchgang in der Kraft-Zeit-Kurve umfasst.

21. Verfahren gemäß einem der Ansprüche 1 bis 20, **dadurch gekennzeichnet, dass** die charakteristische(n) Größe(n) das Integral unter der Kraft-Zeit-Kurve im Bereich des repulsiven Kontaktes umfasst.

22. Verfahren gemäß einem der Ansprüche 1 bis 21, **dadurch gekennzeichnet, dass** die charakteristische(n) Größe(n) das Integral unter der Kraft-Zeit-Kurve vom Beginn des Kontaktes bis zum Erreichen des Kraftmaximums umfasst.

23. Verfahren gemäß einem der Ansprüche 1 bis 22, **dadurch gekennzeichnet, dass** die charakteristische(n) Größe(n) das Integral unter der Kraft-Zeit-Kurve vom Zeitpunkt des Erreichens der maximalen Kraft bis zum Nulldurchgang der Kraft umfasst.

24. Verfahren gemäß einem der Ansprüche 1 bis 23, **dadurch gekennzeichnet, dass** die charakteristische(n) Größe(n) das Integral unter der Kraft-Zeit-Kurve vom Zeitpunkt des Erreichens der minimalen Kraft bis zum Nulldurchgang der Kraft umfasst.

25. Verfahren gemäß einem der Ansprüche 1 bis 24, **dadurch gekennzeichnet, dass** die charakteristische(n) Größe(n) die Differenz des Integrals unter der Kraft-Zeit-Kurve im Bereich des repulsiven Kontaktes und des Integrals unter der Kraft-Zeit-Kurve vom Beginn des Kontaktes bis zum Erreichen der Maximal-Kraft umfasst.

26. Verfahren gemäß einem der Ansprüche 1 bis 25, **dadurch gekennzeichnet, dass** die charakteristische(n) Größe(n) das Integral unter der Kraft-Zeit-Kurve im Bereich des adhäsiven Kontaktes umfasst

27. Verfahren gemäß einem der Ansprüche 1 bis 26, **dadurch gekennzeichnet, dass** die charakteristische(n) Größe(n) das Integral unter der Kraft-Zeit-Kurve vom Zeitpunkt des Nulldurchgang der Kraft bis zum Erreichen des Kraftminimums umfasst.

28. Verfahren gemäß einem der Ansprüche 1 bis 27, **dadurch gekennzeichnet, dass** die charakteristische(n) Größe(n) das Integral unter der Kraft-Zeit-Kurve vom Zeitpunkt des Erreichen des Kraftminimums bis zum Nulldurchgang der Kraft umfasst.

29. Verfahren gemäß einem der Ansprüche 1 bis 28, **dadurch gekennzeichnet, dass** die aus der digitalisierten Kraft-Zeit-Kurve ermittelten charakteristische(n) Größe(n) in einem zweiten Bereich der Speichereinheit abgelegt wird.

30. Rastersonden-Mikroskop zur Durchführung des Verfahrens gemäß einem der Ansprüche 1 bis 29, mit
30.1 einer Rastersonde;
30.2 Mitteln zum Verfahren der Rastersonde lateral und senkrecht relativ zur Probenoberfläche:
30.3 Mittel zum Anregen einer periodischen Bewegung der Rastersonde senkrecht zur Probenoberfläche an vorbestimmten Rasterpunkten, so dass der Abstand zwischen Probenoberfläche und Rastersonde periodisch moduliert wird;
30.4 Mittel zur Aufnahme einer Kraft-Zeit-Kurve der senkrecht zur Probenoberfläche periodisch modulierten Rastersonde, **gekennzeichnet durch**
30.5 eine A/D-Wandlereinrichtung, um die aufgenommene Kraft-Zeit-Kurve zu digitalisieren;
30.6 eine Rechnereinrichtung in der die digitallsierte Kraft-Zelt-Kurve In Echtzelt ausgewertet wird;
30.7 Mittel eingerichtet zur Bestimmung vorgegebener charakteristischer Größen an jedem Rasterpunkt aus der ausgewerteten, digitalisierten Kraft-Zeit-Kurve für diesen Rasterpunkt wobei aus dieser oder diesen charakteristischen Größen der Rasterpunkte eine Abbildung der Probenoberfläche und/oder kontrollgrößen für den Meßablauf erhalten werden und
30.8 Mittel eingerichtet zu Nachführen der Rastersonde mit Hilfe der in Echtzeit ausgewerteten Größen als Regelsignal.

31. Rastersonden-Mikroskop, gemäß Anspruch 30, **dadurch gekennzeichnet, dass** das Rastersonenmirkroskop Mittel zur Auswertung der digitalisierten Kraft-Zeit-Kurve umfasst, wobei die Auswertung während der Messung erfolgen kann, oder anhand der in einem ersten Speicherbereich abgelegten Kraft-Zeit-Kurve.

32. Rastersondenmikroskop gemäß Anspruch 31, **dadurch gekennzeichnet, dass** ein zweiter Speicherbereich zum Ablegen der charakteristischen Größen vorgesehen ist.

33. Rastersondenmikroskop gemäß einem der Ansprüche 30 bis 32, **dadurch gekennzeichnet, dass** die Mittel zur periodischen Anregung ein Piezoelement umfassen.

34. Rastersondenmikroskop gemäß einem der Ansprüche 30 bis 33, **dadurch gekennzeichnet, dass** die Rastersonde eine an einem Balken angeordnete Spitze umfasst und die Mittel zur Aufnahme der Kraft-Zeit-Kurve Mittel zur Messung der Balkendurchbiegung umfassen.

## Claims

1. Method for the generation of the image of a sample surface to be investigated with a resolution that is better than 1 µm laterally to the sample surface and is better than 100 nm vertically to the surface, wherein
1.1 a scanning probe scans the surface point by point and
1.2.1 at each scanning point in the sample surface the distance between scanning probe and sample surface is modulated periodically so that a force/time plot for the scanning probe is obtained for this point,
**characterised in that**
1.3 the recorded force/time plot is digitised by means of an A/D converter and the resulting data stream is evaluated in real time,
1.4 one or more characteristic values of the force/time plot are determined for each scanning point in real time from the digitised force/time plot evaluated in real time.
1.5 an image of the sample surface and/or control values for the measurement procedure are obtained from this or these characteristic values for the scanning points and
1.6 values for the control parameters for the scanning probe are determined from the data stream evaluated in real time, which control parameters are made available to the controller or controllers for the scanning probe in real time.

2. Method according to Claim 1, **characterised in that** the digitised data record is stored in a first region of a memory device for subsequent evaluations.

3. Method according to Claim 2, **characterised in that** one or more characteristic values for each scanning point are determined from the digitised stored data record and an image of the sample surface is obtained from these values.

4. Method according to one of Claims 1 to 3, **characterised in that** the frequency of the periodic movement is in the range 1 Hz - 20 kHz and the amplitude is in the range 10 - 500 nm.

5. Method according to one of Claims 1 to 4, **characterised in that** the digitisation of the force/time plot takes place with at least 16-bit resolution and an at least 5 MHz scanning rate.

6. Method according to one of Claims 1 to 5, **characterised in that** at least part of the evaluation takes place in real time.

7. Method according to one of Claims 1 to 6, **characterised in that** the characteristic value(s) comprise the force value that results if the scanning probe is in the vicinity of the sample surface but is not yet in contact with it.

8. Method according to one of Claims 1 to 7, **characterised in that** the characteristic value(s) comprises the maximum repulsive force value that results while the scanning probe is in contact with the sample surface.

9. Method according to one of Claims 1 to 8, **characterised in that** the characteristic value(s) comprises the difference between a value in the ascending or descending region of the force/time plot and the maximum value of the force/time plot.

10. Method according to one of Claims 1 to 9, **characterised in that** the characteristic value(s) comprises the minimum attractive force value that results when the scanning probe is removed from the sample surface.

11. Method according to one of Claims 1 to 10, **characterised in that** the characteristic value(s) comprises the minimum force value when the scanning probe is drawn towards the sample surface.

12. Method according to one of Claims 1 to 11, **characterised in that** the characteristic value(s) comprises the slope of the force/time plot at a specific point in time when pressing the tip into the sample surface.

13. Method according to one of Claims 1 to 12, **characterised in that** the characteristic value(s) comprises the slope of the force/time plot at a specific point in time when pulling the tip away from the sample surface.

14. Method according to one of Claims 1 to 13, **characterised in that** the characteristic value(s) comprises the frequency of the cantilever from the force/time plot in the period of free attenuation of the cantilever.

15. Method according to one of Claims 1 to 14, **characterised in that** the characteristic value(s) comprises the ratio between minimum force value and the subsequent local maximum force value.

16. Method according to one of Claims 1 to 15, **characterised in that** the characteristic value(s) comprises the rise time from the start of the contact of the scanning probe with the sample surface to maximum force.

17. Method according to one of Claims 1 to 16, **characterised in that** the characteristic value(s) comprises the decay time from the time of maximum force until the force/time plot passes through zero.

18. Method according to one of Claims 1 to 17 **characterised in that** the characteristic value(s) comprises the time of the repulsive contact between sample and scanning probe.

19. Method according to one of Claims 1 to 18, **characterised in that** the characteristic value(s) comprises the time of the contact between the scanning probe and the sample surface.

20. Method according to one of Claims 1 to 19, **characterised in that** the characteristic value(s) comprises the time from achieving the minimum force up to the next time the force/time plot passes through zero.

21. Method according to one of Claims 1 to 20, **characterised in that** the characteristic value(s) comprises the integral below the force/time plot in the region of the repulsive contact.

22. Method according to one of Claims 1 to 21, **characterised in that** the characteristic value(s) comprises the integral below the force/time plot from the start of contact until the maximum force is reached.

23. Method according to one of Claims 1 to 22, **characterised in that** the characteristic value(s) comprises the integral below the force/time plot from the time the maximum force is reached until the force passes through zero.

24. Method according to one of Claims 1 to 23, **characterised in that** the characteristic value(s) comprises the integral below the force/time plot from the time the minimum force is reached to the time the force passes through zero.

25. Method according to one of Claims 1 to 24, **characterised in that** the characteristic value(s) comprises the difference between the integral below the force/time plot in the region of the repulsive contact and the integral below the force/time plot from the start of contact until the maximum force is reached.

26. Method according to one of Claims 1 to 25, **characterised in that** the characteristic value(s) comprises the integral below the force/time plot in the region of the adhesive contact.

27. Method according to one of Claims 1 to 26, **characterised in that** the characteristic value(s) comprises the integral below the force/time plot from the time the force passes through zero until the minimum force is reached.

28. Method according to one of Claims 1 to 27, **characterised in that** the characteristic value(s) comprises the integral below the force/time plot from the time the minimum force is reached until the force passes through zero.

29. Method according to one of Claims 1 to 28, **characterised in that** the characteristic value(s) determined from the digitised force/time plot is stored in a second region of the memory unit.

30. Scanning probe microscope for carrying out the method according to one of Claims 1 to 29, with
30.1 a scanning probe;
30.2 means for moving the scanning probe laterally and vertically relative to the sample surface;
30.3 means for exciting a periodic movement of the scanning probe vertically to the sample surface at predetermined scanning points, so that the distance between sample surface and scanning probe is modulated periodically;
30.4 means for recording a force/time plot of the scanning probe periodically modulated vertically to the sample surface, **characterised by**
30.5 an A/D converter device in order to digitise the recorded force/time plot;
30.6 a computing device in which the digitised force/time plot is evaluated in real time;
30.7 means for determining pre-specified characteristic values at each scanning point from the evaluated, digitised force/time plot for this scanning point, wherein an image of the sample surface and/or control values for the measurement procedure are obtained from this or these characteristic values of the scanning points, and
30.8 means for guiding the scanning probe with the aid of the values evaluated in real time as control signal.

31. Scanning probe microscope according to Claim 30, **characterised in that** the scanning probe microscope has means for evaluation of the digitised force/time plot, it being possible for the evaluation to take place during the measurement or on the basis of the force/time plot stored in a first memory region.

32. Scanning probe microscope according to Claim 31, **characterised in that** a second memory region is provided for storing the characteristic values.

33. Scanning probe microscope according to one of Claims 30 to 32, **characterised in that** the means for periodic excitation comprise a piezo element.

34. Scanning probe microscope according to one of Claims 30 to 33, **characterised in that** the scanning probe comprises a tip arranged on a bar and the means for recording the force/time plot comprise means for measuring the deflection of the bar.

## Revendications

1. Procédé servant à produire l'image de la surface d'un échantillon à examiner avec une résolution qui, latéralement à la surface de l'échantillon, est meilleure que 1 µm et, verticalement à la surface, est meilleure que 100 nm, dans lequel :
1.1 une sonde à balayage balaie ponctuellement la surface et,
1.2.1 à chaque point de trame de la surface de l'échantillon, la distance entre la sonde à balayage et la surface de l'échantillon est modulée de manière périodique de sorte que, pour ce point, on obtienne une courbe "force en fonction du temps" de la sonde à balayage,
**caractérisé en ce que**
1.3 la courbe "force en fonction du temps" enregistrée est numérisée au moyen d'un convertisseur analogique-numérique, et le flot de données qui en résulte est analysé en temps réel,
1.4 une ou plusieurs grandeurs caractéristiques de la courbe "force en fonction du temps" sont calculées en temps réel pour chaque point de trame à partir de la courbe "force en fonction du temps" numérisée et analysée en temps réel,
1.5 une image de la surface de l'échantillon et/ou des grandeurs de commande destinées au déroulement du mesurage sont obtenues à partir de cette ou de ces grandeurs caractéristiques des points de trame, et
1.6 des grandeurs destinées aux paramètres de réglage de la sonde à balayage, qui sont mises en temps réel à la disposition du ou des régulateurs de la sonde à balayage, sont calculées à partir du flot de données analysé en temps réel.

2. Procédé selon la revendication 1, **caractérisé en ce que** le jeu de données numérisées est déposé, en vue d'analyses ultérieures, dans une première zone d'un dispositif formant mémoire.

3. Procédé selon la revendication 2, **caractérisé en ce qu'**une ou plusieurs grandeurs caractéristiques sont calculées, pour chaque point de trame, à partir du jeu de données numérisées placées en mémoire et **en ce qu'**une image de la surface de l'échantillon est obtenue à partir de ces grandeurs.

4. Procédé selon l'une des revendications 1 à 3, **caractérisé en ce que** la fréquence du mouvement périodique se situe dans une fourchette de 1 Hz à 20 kHz et l'amplitude, dans une fourchette de 10 à 500 nm.

5. Procédé selon l'une des revendications 1 à 4, **caractérisé en ce que** la numérisation de la courbe "force en fonction du temps" a lieu avec une résolution de 16 bits au moins et une fréquence de balayage de 5 MHz au moins.

6. Procédé selon l'une des revendications 1 à 5, **caractérisé en ce qu'**au moins une partie de l'analyse a lieu en temps réel.

7. Procédé selon l'une des revendications 1 à 6, **caractérisé en ce que** la ou les grandeurs caractéristiques comprennent la valeur de force que l'on obtient lorsque la sonde à balayage se trouve à proximité de la surface de l'échantillon mais n'est pas encore en contact avec celle-ci.

8. Procédé selon l'une des revendications 1 à 7, **caractérisé en ce que** la ou les grandeurs caractéristiques comprennent la valeur de force répulsive maximale que l'on obtient lorsque la sonde à balayage est en contact avec la surface de l'échantillon.

9. Procédé selon l'une des revendications 1 à 8, **caractérisé en ce que** la ou les grandeurs caractéristiques comprennent la différence entre une valeur située dans la zone montante ou dans la zone descendante de la courbe "force en fonction du temps" et la valeur maximale de la courbe "force en fonction du temps".

10. Procédé selon l'une des revendications 1 à 9, **caractérisé en ce que** la ou les grandeurs caractéristiques comprennent la valeur de force attractive minimale que l'on obtient lorsque l'on retire la sonde à balayage de la surface de l'échantillon.

11. Procédé selon l'une des revendications 1 à 10, **caractérisé en ce que** la ou les grandeurs caractéristiques comprennent la valeur de force minimale lorsque la sonde à balayage est approchée de la surface de l'échantillon.

12. Procédé selon l'une des revendications 1 à 11, **caractérisé en ce que** la ou les grandeurs caractéristiques comprennent la pente ascendante de la courbe "force en fonction du temps" à un instant déterminé lors de l'enfoncement de la pointe dans la surface de l'échantillon.

13. Procédé selon l'une des revendications 1 à 12, **caractérisé en ce que** la ou les grandeurs caractéristiques comprennent la pente ascendante de la courbe "force en fonction du temps" à un instant déterminé lors du retrait de la pointe de la surface de l'échantillon.

14. Procédé selon l'une des revendications 1 à 13, **caractérisé en ce que** la ou les grandeurs caractéristiques comprennent la fréquence du cantilever issue de la courbe "force en fonction du temps" au cours de la période d'extinction libre de l'oscillation du cantilever.

15. Procédé selon l'une des revendications 1 à 14, **caractérisé en ce que** la ou les grandeurs caractéristiques comprennent le rapport entre la valeur de force minimale et la valeur de force maximale locale qui la suit.

16. Procédé selon l'une des revendications 1 à 15, **caractérisé en ce que** la ou les grandeurs caractéristiques comprennent le temps de montée entre le début du contact de la sonde à balayage avec la surface de l'échantillon et le maximum de force.

17. Procédé selon l'une des revendications 1 à 16, **caractérisé en ce que** la ou les grandeurs caractéristiques comprennent le temps de chute entre l'instant du maximum de force et l'arrivée au passage par zéro dans la courbe "force en fonction du temps".

18. Procédé selon l'une des revendications 1 à 17, **caractérisé en ce que** la ou les grandeurs caractéristiques comprennent le moment du contact répulsif entre l'échantillon et la sonde à balayage.

19. Procédé selon l'une des revendications 1 à 18, **caractérisé en ce que** la ou les grandeurs caractéristiques comprennent l'instant du contact entre la sonde à balayage et la surface de l'échantillon.

20. Procédé selon l'une des revendications 1 à 19, **caractérisé en ce que** la ou les grandeurs caractéristiques comprennent le moment entre l'arrivée au minimum de force et le passage par zéro qui le suit dans la courbe "force en fonction du temps".

21. Procédé selon l'une des revendications 1 à 20, **caractérisé en ce que** la ou les grandeurs caractéristiques comprennent l'intégrale sous la courbe "force en fonction du temps" dans la zone du contact répulsif.

22. Procédé selon l'une des revendications 1 à 21, **caractérisé en ce que** la ou les grandeurs caractéristiques comprennent l'intégrale sous la courbe "force en fonction du temps" entre le début du contact et l'arrivée au maximum de force.

23. Procédé selon l'une des revendications 1 à 22, **caractérisé en ce que** la ou les grandeurs caractéristiques comprennent l'intégrale sous la courbe "force en fonction du temps" entre l'instant où la force maximale est atteinte et le passage de la force par zéro.

24. Procédé selon l'une des revendications 1 à 23, **caractérisé en ce que** la ou les grandeurs caractéristiques comprennent l'intégrale sous la courbe "force en fonction du temps" entre l'instant où la force minimale est atteinte et le passage de la force par zéro.

25. Procédé selon l'une des revendications 1 à 24, **caractérisé en ce que** la ou les grandeurs caractéristiques comprennent la différence entre l'intégrale sous la courbe "force en fonction du temps" dans la zone du contact répulsif et l'intégrale sous la courbe "force en fonction du temps" entre le début du contact et l'arrivée à la force maximale.

26. Procédé selon l'une des revendications 1 à 25, **caractérisé en ce que** la ou les grandeurs caractéristiques comprennent l'intégrale sous la courbe "force en fonction du temps" dans la zone du contact adhérent.

27. Procédé selon l'une des revendications 1 à 26, **caractérisé en ce que** la ou les grandeurs caractéristiques comprennent l'intégrale sous la courbe "force en fonction du temps" entre l'instant du passage de la force par zéro et l'arrivée au minimum de force.

28. Procédé selon l'une des revendications 1 à 27, **caractérisé en ce que** la ou les grandeurs caractéristiques comprennent l'intégrale sous la courbe "force en fonction du temps" entre l'instant où le minimum de force est atteint et le passage de la force par zéro.

29. Procédé selon l'une des revendications 1 à 28, **caractérisé en ce que** la ou les grandeurs caractéristiques calculées à partir de la courbe "force en fonction du temps" numérisée sont déposées dans une deuxième zone de l'unité de mémoire.

30. Microscope à sonde à balayage servant à mettre en oeuvre le procédé selon l'une des revendications 1 à 29, comprenant :
30.1 une sonde à balayage ;
30.2 des moyens servant à déplacer la sonde à balayage de manière latérale et de manière perpendiculaire par rapport à la surface de l'échantillon ;
30.3 des moyens servant à engendrer un mouvement périodique de la sonde à balayage perpendiculairement à la surface de l'échantillon à des points de trame prédéterminés de sorte que la distance entre la surface de l'échantillon et la sonde à balayage soit modulée de manière périodique ;
30.4 des moyens servant à enregistrer une courbe "force en fonction du temps" de la sonde à balayage modulée de manière périodique perpendiculairement à la surface de l'échantillon ;
**caractérisé par** :
30.5 un dispositif formant convertisseur analogique-numérique servant à numériser la courbe "force en fonction du temps" enregistrée ;
30.6 un dispositif de calcul dans lequel la courbe "force en fonction du temps" numérisée est analysée en temps réel ;
30.7 des moyens agencés pour déterminer des grandeurs caractéristiques fixées à l'avance au niveau de chaque point de trame à partir de la courbe "force en fonction du temps" numérisée et analysée pour ce point de trame, une image de la surface de l'échantillon et/ou des grandeurs de commande destinées au déroulement du mesurage étant obtenues à partir de cette ou de ces grandeurs caractéristiques des points de trame, et
30.8 des moyens agencés pour suivre la sonde à balayage à l'aide des grandeurs analysées en temps réel, lesquelles servent de signal de réglage.

31. Microscope à sonde à balayage selon la revendication 30, **caractérisé en ce que** le microscope à sonde à balayage comprend des moyens servant à analyser la courbe "force en fonction du temps" numérisée, l'analyse pouvant avoir lieu pendant le mesurage, ou au moyen de la courbe "force en fonction du temps" déposée dans une première zone de mémoire.

32. Microscope à sonde à balayage selon la revendication 31, **caractérisé en ce qu'**il est prévu une deuxième zone de mémoire pour déposer les grandeurs caractéristiques.

33. Microscope à sonde à balayage selon l'une des revendications 30 à 32, **caractérisé en ce que** les moyens d'excitation périodique comprennent un piézoélément.

34. Microscope à sonde à balayage selon l'une des revendications 30 à 33, **caractérisé en ce que** la sonde à balayage comprend une pointe disposée sur un bras et **en ce que** les moyens d'enregistrement de la courbe "force en fonction du temps" comprennent des moyens de mesurage de la flexion du bras.
